# EUROPÄISCHE PATENTSCHRIFT

(11) **EP 4 225 531 B1**
(45) Veröffentlichungstag und Bekanntmachung des Hinweises auf die Patenterteilung: **27.08.2025**
(21) Anmeldenummer: 21815347.6
(22) Anmeldetag: 07.10.2021
(51) Int. Cl.: B23K 26/70

(54) **KALIBRIERVORRICHTUNG, BEARBEITUNGSSYSTEM UND KALIBRIERVERFAHREN**
CALIBRATION DEVICE, MACHINING SYSTEM AND CALIBRATION METHOD
DISPOSITIF DE CALIBRAGE, SYSTÈME D'USINAGE ET PROCÉDÉ DE CALIBRAGE

(30) Priorität: 12.10.2020 DE 102020212847
(43) Veröffentlichungstag der Anmeldung: 16.08.2023
(73) Patentinhaber: TRUMPF Laser SE, 78713 Schramberg (DE)
(72) Erfinder: NOTHEIS, Thomas, 78713 Schramberg (DE); STAMBKE, Martin, 78655 Dunningen (DE); EHRMANN, Patrick, 78713 Schramberg-Sulgen (DE); SCHMITT, Klemens, 78713 Schramberg (DE)
(74) Vertreter: Trumpf Patentabteilung
(86) Internationale Anmeldenummer: PCT/EP2021/077695
(87) Internationale Veröffentlichungsnummer: WO 2022/078866

(56) Entgegenhaltungen:
- DE-B3- 102018 219 129
- US-A1- 2020 174 353
- US-A1- 2020 254 561
- US-B2- 8 803 073

## Beschreibung

### Hintergrund der Erfindung

Die Erfindung betrifft eine Kalibriervorrichtung für ein Bearbeitungssystem mit mehreren optischen Werkzeugen, wobei die Kalibriervorrichtung eine Sensoranordnung zum Erfassen von Licht aufweist. Weiterhin betrifft die Erfindung ein Verfahren zum Kalibrieren eines Bearbeitungssystems mit mehreren optischen Werkzeugen sowie ein Bearbeitungssystem mit mehreren optischen Werkzeugen.

Moderne Werkzeugmaschinen mit optischen Werkzeugen, insbesondere Laserschneidmaschinen, weisen neben dem eigentlichen Bearbeitungswerkzeug oft zusätzliche optische Werkzeuge auf. Die zusätzlichen optischen Werkzeuge können beispielsweise zur Unterstützung des Bearbeitungswerkzeugs und/oder zur Qualitätssicherung eingesetzt werden. Dies verbessert den Bearbeitungsprozess durch die Werkzeugmaschinen.

Um optische Werkzeuge präziser bei der Bearbeitung einsetzen zu können, müssen die optischen Werkzeuge hinsichtlich ihrer Fokuslagen kalibriert werden. Hierzu ist es grundsätzlich bekannt die optischen Werkzeuge separat voneinander zu kalibrieren, wozu für jedes optische Werkzeug ein eigenes Kalibriermittel eingesetzt werden kann.

Aus DE 10 2004 043 072 A1 ist eine Vorrichtung zum Bearbeiten durch einen Laserstrahl bekannt. Die Vorrichtung weist einen relativ zu mindestens einem Werkstück beweglichen Laserkopf, eine optische Anordnung zum Ausrichten und Fokussieren des Laserstrahls auf eine Wirkzone und mindestens eine am Laserkopf angeordneten Kamera, die auf die Wirkzone gerichtet ist, auf. Der Laserkopf ist in eine ortsfeste Kalibrierstation positionierbar, wobei die Kalibrierstation in der Wirkzone ein Kalibrierobjekt enthält. Die Kalibrierstation besteht aus einer ebenen Platte. Auf der Oberfläche der Platte befinden sich ein festes Muster und Spurbahnen. Das Muster kann zur besseren Erkennbarkeit durch selbstleuchtende Elemente gebildet sein. Als selbstleuchtende Elemente können Leuchtdioden vorgesehen werden, die in Vertiefungen an der Oberfläche der Platte sitzen und jeweils mit einer Streulichtscheibe abgedeckt sind. In der Mitte der Platte ist eine Einrichtung zur Strahlvermessung integriert. Hierzu sind in der Oberfläche matrixförmig angeordnete Fotoempfänger vorgesehen.

DE 10 2018 219 129 B3 offenbart ein Verfahren zum Bestimmen von translatorischen und/oder rotatorischen Abweichungen zwischen dem Messkoordinatensystem eines um zwei Achsen verkippbaren Messspiegelscanners, der einen z. B. von einem Kohärenztomographen erzeugten Messstrahl zweidimensional ablenkt, und dem Bearbeitungskoordinatensystem eines um zwei Achsen verkippbaren Bearbeitungsspiegelscanners, der sowohl den vom Messspiegelscanner abgelenkten Messstrahl als auch einen Bearbeitungsstrahl zweidimensional auf ein Werkstück ablenkt, wobei der am Werkstück reflektierte Messstrahl den Pfad des einfallenden Messstrahls zurückläuft und von einem ortauflösenden Messsensor erfasst wird, um ortauflösende Informationen des Werkstücks zu ermitteln, und wobei in einer Nullstellung des Messspiegelscanners der reflektierte Messstrahl im Sensorbild des Messsensors auf eine vorbekannte Bildposition abgebildet wird. Zur Bestimmung einer translatorischen Abweichung zwischen dem Bearbeitungs- und dem Messkoordinatensystem wird eine x-y-Fokuslagenabweichung des Bearbeitungsstrahls relativ zur Lochblendenmitte eines auf der Werkstückauflageebene angeordneten Lochblendendetektors ermittelt. Dies erfolgt durch Abscannen der Lochblende mit dem vom Bearbeitungsspiegelscanner abgelenkten Bearbeitungsstrahl in einem x-y-Raster und durch Auswerten der in jedem der Rasterpunkte von einer der Lochblende nachgeordneten Detektorfläche detektierten Laserleistung. Der Bearbeitungsspiegelscanner wird dann in der anhand der ermittelten x-y-Fokuslagenabweichung korrigierten Scanstellung fixiert, in der sich die Fokuslage des Bearbeitungsstrahls exakt in der Lochblendenmitte befindet. Bei so fixiertem Bearbeitungsspiegelscanner wird durch Abscannen der Lochblende mit dem vom Messspiegelscanner abgelenkten Messstrahl die Höhe der Lochblende mittels des Messsensors ortsauflösend erfasst. Anhand der im Sensorbild des Messsensors vorhandenen Abweichung zwischen der der Fokuslage des Bearbeitungsstrahls entsprechenden vorbekannten Bildposition und der Lochblendenmitte der höhenmäßig erfassten Lochblende kann eine translatorische Abweichung Δx, Δy zwischen dem Bearbeitungs- und dem Messkoordinatensystem bestimmt werden.

Aus der US 2020/174353 A1 sind ein System und Verfahren zur Kalibrierung eines Fluoreszenzmikroskops und/oder einer Lichtdetektionsvorrichtung unter Verwendung einer Kalibriervorrichtung bekannt. Die Vorrichtung umfasst ein Hauptgehäuse, einen Sensorkopf und eine im Gehäuse angeordnete Mikrocontroller-Baugruppe. Das Gehäuse umfasst einen Adapter, um das Gehäuse mechanisch an ein Mikroskop zu koppeln. Der Sensorkopf umfasst: (i) einen optischen Leistungssensor, um ein Leistungssignal zu erzeugen, das die optische Leistungsgröße des auf den optischen Leistungssensor angewendeten Lichts darstellt, (ii) einen optischen Wellenlängensensor, der so konfiguriert ist, dass er Wellenlängeninformationen erzeugt, die dem auf den optischen Leistungssensor angewendeten Licht zugeordnet sind den optischen Wellenlängensensor und (iii) eine Lichtquelle, die dazu konfiguriert ist, Licht auf eine mit dem Mikroskop verbundene Detektionsvorrichtung zu richten.

Aus der US 8803073 B2 sind ein Verfahren und eine Vorrichtung zum Kalibrieren einer Bestrahlungsvorrichtung einer Anlage zum generativen Herstellen eines dreidimensionalen Objekts bekannt. Das Kalibrieren beinhaltet Schritte zum Anordnen einer Bildwandlerplatte in oder parallel zur Arbeitsebene der Anlage, wobei die Bildwandlerplatte detektierbares Licht abgibt, wenn die Bestrahlungsvorrichtung vorbestimmte Positionen der Bildwandlerplatte mit energiehaltiger Strahlung bestrahlt; zum Abtasten der Bildwandlerplatte durch die Bestrahlungsvorrichtung; zum Erfassen des detektierbaren Lichts durch einen Lichtdetektor; zum Ermitteln von Koordinaten der Bestrahlungsvorrichtung, wenn das detektierbare Licht erfasst wird; zum Vergleichen der ermittelten Koordinaten mit vorgegebenen Referenzkoordinaten; und zum Kalibrieren der Bestrahlungsvorrichtung auf der Grundlage einer Abweichung zwischen den ermittelten Koordinaten und den Referenzkoordinaten.

Aus der US 2020/254561 A1 ist eine Vorrichtung zur Bestimmung einer Fokuslage eines Laserstrahls in einem Laserbearbeitungssystem bekannt, umfassend: ein optisches Element, das für eine Reflektion eines Teils des Laserstrahls zum Auskoppeln eines ersten Substrahls des Laserstrahls eingerichtet ist; einen ortsauflösenden Sensor zur Erfassung einer Intensitätsverteilung des ersten Substrahls; und eine Auswerteeinheit, die eingerichtet ist, um basierend auf der erfassten Intensitätsverteilung einen Ist-Durchmesser des ersten Substrahls zu ermitteln, und aus dem Ist-Durchmesser, einer Laserstrahlleistung und Kalibrierdaten eine Ist-Fokuslage des Laserstrahls zu bestimmen, wobei die Kalibrierdaten in Abhängigkeit von der Laserstrahlleistung gemessene Strahldurchmesser umfassen.

### Aufgabe der Erfindung

Es ist eine Aufgabe der Erfindung, ein einfaches und präzises Kalibrieren mehrerer optischer Werkzeuge eines Bearbeitungssystems in Bezug zueinander zu ermöglichen.

### Beschreibung der Erfindung

Diese Aufgabe wird erfindungsgemäß gelöst durch eine Kalibriervorrichtung gemäß Patentanspruch 1, ein Verfahren gemäß Patentanspruch 13 und ein Bearbeitungssystem gemäß Patentanspruch 16.

### Erfindungsgemäße Kalibriervorrichtung

Die Aufgabe wird mithin durch eine Kalibriervorrichtung für ein Bearbeitungssystem mit mehreren optischen Werkzeugen gelöst. Die Kalibriervorrichtung weist ein Gehäuse mit einer Blendenöffnung, eine Sensoranordnung zum Erfassen von durch die Blendenöffnung einfallendem Licht und eine Lichtquellenanordnung zum Abgeben von Licht durch die Blendenöffnung auf.

Die Kalibriervorrichtung dient zum Kalibrieren der optischen Werkzeuge auf eine gemeinsame Fokuslage. Zum Kalibrieren der Fokuslage ("Fokussieren") kann zunächst eine tatsächliche Fokuslage eines Fokuspunkts des jeweiligen optischen Werkzeugs erfasst werden. Anschließend wird der Fokuspunkt auf die Blendenöffnung eingestellt. Insbesondere kann das jeweilige optische Werkzeug durch "Scharfstellen" der Blendenöffnung von einem unkalibrierten in einen kalibrierten Zustand überführt werden. Grundsätzlich werden mehrere, besonders bevorzugt alle, optischen Werkzeuge des Bearbeitungssystems mit derselben Kalibriervorrichtung kalibriert. Indem die erfindungsgemäße Kalibriervorrichtung zum Kalibrieren mehrerer bzw. aller optischen Werkzeuge des Bearbeitungssystems verwendet wird, kann das Kalibrieren - anders als bei der Verwendung separater Einrichtungen zum Kalibrieren der einzelnen optischen Werkzeuge - besonders schnell und einfach durchgeführt werden. Weiterhin wird die Übereinstimmung der Fokuslagen der optischen Werkzeuge durch die gemeinsame (durch die Blendenöffnung definierte) Referenzlage verbessert.

Die Sensoranordnung weist zumindest einen Sensor auf. Die Sensoranordnung ist zum mittelbaren oder unmittelbaren Erfassen einer Lichtintensität des einfallenden Lichts ausgebildet. Hierzu kann die Sensoranordnung zum Erfassen einer Temperatur und/oder einer Helligkeit ausgebildet sein. Durch das Erfassen der Lichtintensität kann ein Rückschluss auf das durch die Blendenöffnung einfallende Licht gezogen werden. Bei Kenntnis des von einem lichtemittierenden optischen Werkzeug abgegebenen Lichts kann durch Erfassen des durch die Blendenöffnung einfallenden Lichts mithin ein Rückschluss auf die Fokuslage des lichtemittierenden optischen Werkzeugs in Bezug zu der Blendenöffnung gezogen werden. Beispielsweise entspricht die Fokuslage der Lage der Blendenöffnung (d. h. der Fokuspunkt liegt in der Blendenöffnung), wenn das erfasste Licht dem von dem optischen Werkzeug abgegebenen Licht entspricht.

Die Lichtquellenanordnung dient zum Beleuchten der Blendenöffnung der Kalibriervorrichtung. Mit anderen Worten wird die Blendenöffnung durch Abstrahlen von durch die Lichtquellenanordnung abgegebenem Licht hervorgehoben. Anhand des durch die Blendenöffnung abgestrahlten Lichts kann die Fokuslage eines lichtdetektierenden optischen Werkzeugs kalibriert werden. Hierbei kann vorgesehen sein, dass die Lichtquellenanordnung Licht mit einer definierten Wellenlänge abgibt, die durch das zu kalibrierende optische Werkzeug detektiert werden kann. Insbesondere kann die Lichtquellenanordnung zur Abgabe von Licht mit unterschiedlichen Wellenlängen ausgebildet sein. Hierdurch kann das Hervorheben der Blendenöffnung durch Beleuchten mit Licht einer bestimmten Wellenlänge spezifisch an unterschiedliche zu kalibrierende optische Werkzeuge angepasst werden.

Unter dem Begriff "Licht" wird vorliegend elektromagnetische Strahlung, insbesondere mit einer Wellenlänge von wenigstens 10 nm und/oder höchstens 1 mm, verstanden.

Das Gehäuse ist mit Ausnahme der Blendenöffnung vorzugsweise vollumfänglich geschlossen. Dies verhindert ein Eindringen von Verschmutzungen in das Gehäuse. Das Gehäuse ist typischerweise mehrteilig ausgebildet. Dies vereinfacht die Anordnung und/oder das Auswechseln von Komponenten, beispielsweise bei der Herstellung und/oder Reparatur der Kalibriervorrichtung.

Die Lichtquellenanordnung und Sensoranordnung sind grundsätzlich im Gehäuse angeordnet. Hierdurch kann einfallendes Licht unter definierten Bedingungen durch die Sensoranordnung erfasst werden. Ebenso kann Licht von der Lichtquellenanordnung unter definierten Bedingungen durch die Blendenöffnung abgestrahlt werden. Störfaktoren für das Kalibrieren, wie beispielsweise Umgebungslicht, werden hierdurch minimiert. Dies erhöht die Genauigkeit der Kalibrierung.

Die Kalibriervorrichtung weist eine im Gehäuse angeordnete Platine auf, an welcher die Lichtquellenanordnung und/oder die Sensoranordnung gehalten sind. In vorteilhafter Weise kann somit die Anordnung der elektronischen Komponenten (Platine, Sensoranordnung, Lichtquellenanordnung) in nur einem Fertigungsschritt und die Anordnung der Platine im Gehäuse in lediglich einem weiteren Fertigungsschritt erfolgen.

Vorzugsweise ist die Platine parallel zu einer die Blendenöffnung aufweisenden Blende angeordnet. Mit anderen Worten kann die Platine orthogonal zu einer Blendenachse der Blendenöffnung angeordnet sein. Dies vermeidet optische Verzerrungen. Bevorzugt ist die Platine im Gehäuse, insbesondere zwischen zwei voneinander lösbaren Gehäuseteilen, geklemmt gehalten. Hierdurch kann die Position der Platine im Gehäuse wirksam gesichert werden.

Ferner ist es vorgesehen, dass die Sensoranordnung auf einer von der Blendenöffnung abgewandten Seite der Platine angeordnet ist. Zum Leiten des durch die Blendenöffnung einfallenden Lichts zu der Sensoranordnung ist eine lichtleitende Struktur vorgesehen. Mit anderen Worten dient die Platine als Lichtschutz für die Sensoranordnung. Hierdurch kann die Sensoranordnung vor direkter Belichtung durch das einfallende Licht geschützt werden. Dies beugt wirkungsvoll Beschädigungen an der Sensoranordnung vor. Die lichtleitende Struktur ermöglicht ungeachtet der lichtgeschützten Lage der Sensoranordnung das Erfassen des durch die Blendenöffnung einfallenden Lichts.

Vorzugsweise weist die lichtleitende Struktur eine geminderte Lichtdurchlässigkeit auf, um die Lichtintensität des einfallenden Lichts zu verringern. Bevorzugt weist die lichtleitende Struktur eine Lichtdurchlässigkeit von höchstens 90 Prozent, besonders bevorzugt von höchstens 75 Prozent, ganz besonders bevorzugt von höchstens 50 Prozent, auf. Weiter bevorzugt weist die lichtleitende Struktur eine Lichtdurchlässigkeit von mindestens 10 Prozent, besonders bevorzugt von mindestens 20 Prozent, ganz besonders bevorzugt von mindestens 40 Prozent, auf. Die Lichtintensität des einfallenden Lichts kann somit durch die lichtleitende Struktur auf ein für das Erfassen durch die Sensoranordnung geeignetes Maß verringert werden.

Besonders bevorzugt ist eine Weiterentwicklung, bei der die lichtleitende Struktur eine lichtdurchlässige Hülse, insbesondere eine PET-Hülse (Polyethylenterephthalat-Hülse), aufweist, mittels welcher die Platine im Gehäuse gehalten ist. Die Hülse dient somit einerseits zum Leiten des Lichts und andererseits zum Halten der Platine. Vorzugsweise kann die lichtleitende Struktur durch die lichtdurchlässige Hülse gebildet sein. Besonders vorteilhaft kann somit die lichtleitende Funktion durch lediglich eine lichtleitende Struktur erfolgen. Die lichtdurchlässige Hülse erstreckt sich typischerweise auf der der Blendenöffnung zugewandten und/oder der der Blendenöffnung abgewandten Seite der Platine. Dies vereinfacht das Einkoppeln und/oder Auskoppeln des Lichts in die lichtleitende Struktur. Zum Halten der Platine im Gehäuse kann die lichtdurchlässige Hülse den Rand der Platine einfassen. Mit anderen Worten ist die lichtdurchlässige Hülse zwischen dem Rand der Platine und einer Wandung des Gehäuses angeordnet. Einfallendes Licht kann auf diese Weise lediglich über die lichtleitende Struktur zur Sensoranordnung gelangen, wodurch die Genauigkeit weiter erhöht werden kann.

Bei einer bevorzugten Weiterbildung weist die Kalibriervorrichtung ein zwischen der Blendenöffnung und der Platine angeordnetes optisches Element zur Umlenkung von durch die Blendenöffnung einfallendem Licht auf. Insbesondere lenkt das optische Element entlang einer Blendenachse einfallendes Licht von der Blendenachse ab. Hierdurch kann das einfallende Licht vorteilhaft in Richtung der lichtleitenden Struktur umgelenkt werden, was die Lichtleitung zur Sensoranordnung weiter verbessert. Das optische Element ermöglicht grundsätzlich ein Austreten von von der Lichtquellenanordnung ausgesandtem Licht durch die Blendenöffnung.

Bei einer bevorzugten Ausführungsform der Kalibriervorrichtung weist die Sensoranordnung wenigstens eine Fotodiode und/oder wenigstens einen Temperatursensor auf. Das Erfassen des durch die Blendenöffnung einfallenden Lichts kann dabei unmittelbar durch Messen der Lichtintensität und/oder mittelbar durch Messen eines Temperarturanstiegs im Gehäuse erfolgen. Die Fotodiode kann die Intensität von insbesondere sichtbarem Licht erfassen.

Die Lichtquellenanordnung ist vorzugsweise in unmittelbarer Nähe zur Blendenöffnung angeordnet. Hierdurch wird ein energieeffizientes Abgeben von Licht durch die Blendenöffnung ermöglicht.

In besonderer Ausgestaltung ist das optische Element zur Ablenkung von von der Lichtquellenanordnung emittiertem Licht in Richtung der Blendenöffnung ausgebildet. Dies verbessert das Abgeben von Licht durch die Blendenöffnung weiter. In diesem Fall erfüllt das optische Element eine Doppelfunktion. Zum einen wird von der Lichtquellenanordnung emittiertes Licht auf die Blendenöffnung gebündelt und zum anderen wird durch die Blendenöffnung einfallendes Licht gestreut, beziehungsweise an der Lichtquellenanordnung vorbeigelenkt. Hierdurch kann die Lichtquellenanordnung vor dem einfallenden Licht geschützt und dennoch eine effektive Ausleuchtung der Blendenöffnung ermöglicht werden.

Weiter bevorzugt ist eine Ausführungsform, bei der die Lichtquellenanordnung zumindest eine erste Lichtquelle, insbesondere eine Leuchtdiode, zur Abgabe von Licht mit einer Wellenlänge von wenigstens 760 nm, bevorzugt wenigstens 1100 nm, besonders bevorzugt wenigstens 1500 nm, und bevorzugt höchstens 2000 nm, besonders bevorzugt höchstens 1600 nm, aufweist. Dies ermöglicht das Detektieren der Blendenöffnung durch optische Werkzeuge auf Basis von Infrarot-Licht, beispielsweise Pyrometer, Thermokameras usw.

In einer Weiterbildung ist die erste Lichtquelle auf einer Blendenachse der Blendenöffnung angeordnet. Dies begünstigt das unmittelbare Abgeben von Licht durch die Blendenöffnung bei gleichmäßiger Ausleuchtung der Blendenöffnung.

Bevorzugt ist weiter eine Ausführungsform, bei der die Lichtquellenanordnung zumindest eine zweite Lichtquelle, insbesondere eine Leuchtdiode, zur Abgabe von Licht mit einer Wellenlänge von höchstens 760 nm, besonders bevorzugt höchstens 650 nm und bevorzugt wenigstens 610 nm, besonders bevorzugt wenigstens 640 nm aufweist. Dies ermöglicht das Detektieren der Blendenöffnung durch optische Werkzeuge auf Basis von Rot-Licht, beispielsweise Abstandsmessvorrichtungen, Nahtlageregelvorrichtungen, usw.

Die zumindest eine zweite Lichtquelle ist vorzugsweise in einem Abstand zu der Blendenachse angeordnet. Dies ermöglicht es, die erste Lichtquelle auf der Blendenachse anzuordnen. Typischerweise weist die Lichtquellenanordnung mehrere, insbesondere zumindest zwei, besonders bevorzugt zumindest drei, zweite Lichtquellen auf. Die mehreren zweiten Lichtquellen sind vorzugsweise gleichmäßig um die Blendenöffnung verteilt angeordnet. Hierdurch wird eine gleichmäßige Ausleuchtung der Blendenöffnung ermöglicht.

Bei einer bevorzugten Ausführungsform weist die Kalibriervorrichtung ein sich orthogonal zu einer Blendenachse der Blendenöffnung erstreckendes Prüfblech auf. Das Prüfblech dient zum Kalibrieren einer gemeinsamen Ausrichtung der optischen Werkzeuge. Die gemeinsame Ausrichtung kann durch übereinstimmende Koordinatensysteme der optischen Werkzeuge und/oder durch vordefinierte Zusammenhänge der Koordinatensysteme gekennzeichnet sein. Im kalibrierten Zustand können optische Achsen der optischen Werkzeuge parallel zueinander verlaufen. Die Erstreckung des Prüfblechs orthogonal zur Blendenachse vereinfacht das Kalibrieren der Ausrichtung.

Vorzugsweise ist das Prüfblech aus Metall, insbesondere Aluminium, gefertigt. Dies ist vorteilhaft in Bezug auf die Stabilität, insbesondere Festigkeit und/oder Steifigkeit, des Prüfblechs.

Eine bevorzugte Weiterbildung der Kalibriervorrichtung sieht vor, dass das Prüfblech eine bereichsweise beschichtete, vorzugsweise eloxierte, Oberfläche aufweist. Die Beschichtung kann die Oberfläche des Prüfblechs schützen. Ferner kann die Beschichtung das Kalibrieren der optischen Werkzeuge unterstützen, beispielsweise durch ihre Farbe oder Farbunterschiede.

Weiterhin bevorzugt ist eine Weiterbildung, bei der das Prüfblech definierte Oberflächenstrukturen zur Kalibrierung der optischen Werkzeuge aufweist. Die Oberflächenstrukturen unterscheiden sich von der übrigen Oberfläche des Prüfblechs. Außer den Oberflächenstrukturen kann die gesamte übrige Oberfläche des Prüfblechs beschichtet sein. Die Oberflächenstrukturen können beispielsweise Farb-, Geometrie-, Höhen- und/oder Rauheits-Unterschiede zum Umfeld aufweisen. Insbesondere können Oberflächenstrukturen als Rücknehmungen bzw. Ausnehmungen (Taschen), Vorsprünge, Markierungen und/oder Skalen ausgebildet sein. Die Aufzählung ist dabei lediglich beispielhaft, jedoch nicht abschließend zu verstehen. Die Oberflächenstrukturen vereinfachen die Kalibrierung der Ausrichtung der optischen Werkzeuge.

Besonders bevorzugt ist eine Weiterentwicklung, bei der das Prüfblech zumindest eine, insbesondere zumindest zwei, besonders bevorzugt zumindest vier, Rücknehmungen und/oder Vorsprünge mit definierten Höhensprüngen parallel zur Blendenachse aufweist. Die Rücknehmungen bzw. Vorsprünge sind mit anderen Worten parallel zur Blendenachse gegenüber an sie angrenzenden Bezugsflächen des Prüfblechs versetzt. Dies ermöglicht die genaue Ermittlung der Ausrichtung durch winkelabhängiges Vermessen der Rücknehmungen und/oder Vorsprünge.

Angrenzend an die Rücknehmungen und/oder Vorsprünge kann das Prüfblech blanke, insbesondere metallisch blanke, Bezugsflächen aufweisen. Mit anderen Worten weisen die Bezugsflächen eine unbeschichtete Oberfläche auf. Dies erhöht die Genauigkeit des Vermessens der Rücknehmungen und/oder Vorsprünge unter Berücksichtigung der Bezugsflächen und kann somit auch die Genauigkeit beim Kalibrieren der Ausrichtung der optischen Werkzeuge erhöhen.

Bei einer bevorzugten Weiterbildung ist vorgesehen, dass das Prüfblech zumindest eine Prüfskala mit definierten Referenzabständen aufweist. Durch Vermessen der definierten Referenzabstände ist eine Ermittlung der Ausrichtung eines optischen Werkzeugs besonders genau möglich.

### Erfindungsgemäßes Verfahren

Die der Erfindung zugrundeliegende Aufgabe wird ferner gelöst durch ein Verfahren zum Kalibrieren eines Bearbeitungssystems mit zumindest einem lichtemittierenden optischen Werkzeug und zumindest einem lichtdetektierenden optischen Werkzeug mittels einer oben beschriebenen, erfindungsgemäßen Kalibriervorrichtung. Das Verfahren weist die folgenden Verfahrensschritte auf:
A) Erfassen von durch die Blendenöffnung einfallendem, von dem lichtemittierenden optischen Werkzeug abgegebenem Licht mit der Sensoranordnung und Einstellen einer Fokuslage des lichtemittierenden optischen Werkzeugs auf die Blendenöffnung;
B) Erfassen von durch die Blendenöffnung ausgesandtem, von der Lichtquellenanordnung abgegebenem Licht mit dem lichtdetektierenden optischen Werkzeug und Einstellen einer Fokuslage des lichtdetektierenden optischen Werkzeugs auf die Blendenöffnung.

Die Fokuslagen des lichtemittierenden und des lichtdetektierenden Werkzeugs werden vorzugsweise in einem dem Verfahrensschritt A) vorausgehenden Verfahrensschritt in unmittelbarer Nähe zur Blendenöffnung (vor-)positioniert.

Ein lichtemittierendes Werkzeug weist zumindest ein lichtabgebendes Element auf, wobei das abgegebene Licht zur unmittelbaren Erfüllung des Werkzeugzwecks dient. Lichtemittierende Werkzeuge sind beispielsweise Bearbeitungslaser und/oder Laser-Abstandsmesser.

Ein lichtdetektierendes Werkzeug weist zumindest ein lichtdetektierendes Element auf, das eine Analyse von Licht ermöglicht, das insbesondere von einer Licht abgebenden und/oder einer Licht reflektierenden Oberfläche ausgeht. Lichtdetektierende Werkzeuge sind beispielsweise thermische und/oder optische Kameras.

Das durch die Blendenöffnung einfallende Licht wird im Verfahrensschritt A) durch die Sensoranordnung, insbesondere durch eine Fotodiode der Sensoranordnung, erfasst. Typischerweise wird das lichtemittierende Werkzeug gemäß einem Prüfmuster in einer zur Blendenöffnung parallelen Ebene, d. h. senkrecht zur Blendenachse, über der Blendenöffnung bewegt. Das Prüfmuster weist insbesondere mehrere Prüfpunkte mit definierter Auslenkung auf. Es kann vorgesehen sein, dass bei jeder Auslenkung durch das lichtemittierende Werkzeug definiert Licht abgegeben und der Anteil des durch die Blendenöffnung einfallenden Lichts erfasst wird. Mit anderen Worten wird zu jeder definierten Auslenkung die durch die Blendenöffnung einfallende Menge an Licht erfasst. In einem unkalibrierten Zustand der Fokuslage resultiert somit eine unsymmetrische Verteilung des erfassten Lichts über das Prüfmuster, auf Basis derer die Fokuslage des lichtemittierenden Werkzeugs eingestellt werden kann. Parallel zur Blendenachse kann die Fokuslage kalibriert werden, indem das lichtemittierende Werkzeug verfahren wird, bis die von der Sensoranordnung erfasst Lichtintensität ein Maximum erreicht.

In analoger Weise zur vorhergehenden Beschreibung kann die Fokuslage des lichtdetektierenden Werkzeugs eingestellt werden. Das lichtdetektierende Werkzeug wird gemäß einem Prüfmuster senkrecht und/oder parallel zur Blendenachse bewegt. Zu jeder Auslenkung kann das von der Blendenöffnung ausgesandte Licht durch das lichtdetektierende Werkzeug erfasst werden. Das erfasste ausgesandte Licht ist dabei abhängig von der ausgelenkten Position des lichtdetektierenden Werkzeugs über der Blendenöffnung. Auf Grundlage des positionsabhängig erfassten Lichts kann die Fokuslage des lichtdetektierenden Werkzeugs eingestellt werden.

Vorzugsweise weist das Prüfmuster zumindest 9, insbesondere zumindest 25, besonders bevorzugt zumindest 81, definierte Auslenkungen auf. Hierdurch kann die Einstellung der Fokuslage besonders genau erfolgen. Weiter bevorzugt weist das Prüfmuster die definierten Auslenkungen in Richtung zweier, besonders bevorzugt dreier, Koordinatenachsen des lichtemittierenden Werkzeugs auf. Mit anderen Worten haben die definierten Auslenkungen eine X- und eine Y-Komponente sowie vorzugsweise eine Z-Komponente. Hierdurch kann die Einstellung der Fokuslage in den entsprechenden Koordinatenrichtungen erfolgen.

Wenn die Kalibriervorrichtung ein Prüfblech aufweist, kann das Verfahren die folgenden weiteren Verfahrensschritte aufweisen:
C) Markieren eines Prüfzeichens auf dem Prüfblech durch das lichtemittierende Werkzeug;
D) Überprüfen der Fokuslage des lichtemittierenden Werkzeugs durch Erfassen des Prüfzeichens mittels des lichtdetektierenden optischen Werkzeugs.

Das Prüfblech weist vorzugsweise wenigstens einen definierten Abschnitt zur Markierung, beispielsweise zur Lasergravur, eines Prüfzeichens auf. Der bzw. die definierten Bereiche weisen bevorzugt keine Oberflächenstrukturen auf.

Vorzugsweise wird der Verfahrensschritt C) vor und nach dem Verfahrensschritt A) durchgeführt. Eine Überprüfung kann in diesem Fall vorteilhafterweise durch Bestimmen der Abweichung zwischen den beiden markierten Prüfzeichen erfolgen.

Die Bestimmung der Abweichung zwischen den Prüfzeichen erfolgt vorzugsweise durch das lichtdetektierende Werkzeug, insbesondere eine Kamera mit einem Bildverarbeitungssystem. Hierdurch können die optischen Werkzeuge des Bearbeitungssystems vorteilhaft zur gegenseitigen Kontrolle verwendet werden.

Wenn das Prüfblech Oberflächenstrukturen aufweist, können die folgenden weiteren Verfahrensschritte vorgesehen sein:
E) Definiertes Auslenken des lichtdetektierenden optischen Werkzeugs;
F) Vermessen zumindest einer der Oberflächenstrukturen durch das lichtdetektierende optische Werkzeug;
G) Abgleich der Messwerte mit hinterlegten Referenzwerten;
H) Ausrichten des lichtdetektierenden Werkzeugs auf Basis der Abweichung zwischen Messwerten und Referenzwerten.

Die Verfahrensschritte E) bis H) erfolgen vorzugsweise nach Einstellen der Fokuslage des lichtdetektierenden Werkzeugs. Vorteilhaft in Bezug auf die Genauigkeit der Kalibrierung der Ausrichtung kann diese somit ausgehend von einem gemeinsamen Referenzpunkt durchgeführt werden.

Die Verfahrensschritte E) bis G) und erforderlichenfalls H) werden vorzugsweise mehrmals durchgeführt. Hierdurch kann die Genauigkeit der Kalibrierung weiter verbessert werden.

Zum Vermessen der Oberflächenstrukturen kann von den Oberflächenstrukturen reflektiertes Licht durch das lichtdetektierende Werkzeug erfasst und anschließend ausgewertet werden. Zur Auswertung kann vorgesehen sein, dass das lichtdetektierende Werkzeug Auswertemittel, insbesondere Software, aufweist. Beispielsweise kann das lichtdetektierende Werkzeug eine Kamera und ein Bildverarbeitungssystem zur Vermessung von durch die Kamera aufgenommenen Bildern aufweisen.

Zur verbesserten Erfassung des von den Oberflächenstrukturen reflektierten Lichts kann vorgesehen sein, dass das lichtdetektierende Werkzeug ein lichtemittierendes Element zur Abgabe von Licht aufweist. Beispielsweise kann eine Kamera ein Belichtungselement zur Verbesserung der Bildqualität aufweisen.

### Erfindungsgemäßes Bearbeitungssystem

Ferner wird die der Erfindung zugrundeliegende Aufgabe gelöst durch ein Bearbeitungssystem mit einer oben beschriebenen, erfindungsgemäßen Kalibriervorrichtung und mit mehreren optischen Werkzeugen. Die mehreren optischen Werkzeuge können unter Verwendung der einen Kalibriervorrichtung kalibriert werden, sodass eine gemeinsame Fokuslage und definierte Ausrichtungen zueinander, insbesondere parallele optische Achsen, eingerichtet werden. Dies kann mit dem oben beschriebenen, erfindungsgemäßen Verfahren erfolgen.

Das Bearbeitungssystem kann wenigstens ein lichtdetektierendes optisches Werkzeug und wenigstens ein lichtemittierendes optisches Werkzeug aufweisen. Vorzugsweise sind die optischen Werkzeuge an einem gemeinsamen Bearbeitungskopf des Bearbeitungssystems angeordnet. Wenn die optischen Werkzeuge über den Bearbeitungskopf gemeinsam bewegt werden, bleiben ihre Fokuslagen relativ zueinander unverändert.

Weitere Vorteile der Erfindung ergeben sich aus der Beschreibung und der Zeichnung. Erfindungsgemäß können die vorstehend genannten und die noch weiter ausgeführten Merkmale jeweils einzeln für sich oder zu mehreren in beliebigen, zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

- Fig. 1: zeigt eine Ausführungsform einer erfindungsgemäßen Kalibriervorrichtung mit einem Gehäuse und einem Prüfblech in einer schematischen Draufsicht;
- Fig. 2: zeigt eine schematische Schnittansicht entlang der Schnittlinie A-A durch die Kalibriervorrichtung aus Fig. 1;
- Fig. 3: zeigt eine schematische Schnittansicht entlang der Schnittlinie B-B durch die Kalibriervorrichtung aus Fig. 1;
- Fig. 4: zeigt ein erfindungsgemäßes Bearbeitungssystem mit mehreren optischen Werkzeugen in einer schematischen Darstellung;
- Fig. 5: zeigt ein Ablaufdiagramm eines erfindungsgemäßen Verfahrens.

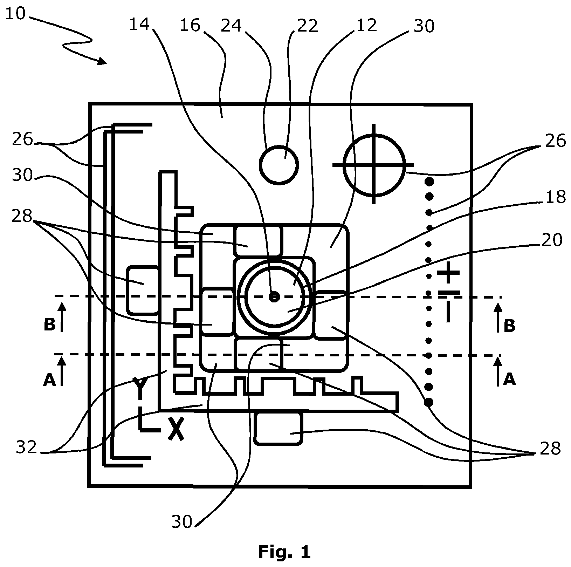

**Fig. 1** zeigt eine erfindungsgemäße Kalibriervorrichtung **10** mit einem Gehäuse **12** mit einer Blendenöffnung **14.**

Das Gehäuse 12 ist hier mittig an einem Prüfblech **16** angeordnet. Das Prüfblech 16 weist zu diesem Zweck vorliegend eine Gehäuseausnehmung **18** auf, die ein Gehäusevorsprung **20** des Gehäuses 12 durchgreift. Zur verdrehsicheren Anordnung des Prüfblechs 16 am Gehäuse 12 weist das Gehäuse 12 einen Zentrierstift **22** auf, der in einer Zentrierausnehmung **24** des Prüfblechs 16 angeordnet ist. Das Prüfblech 16 ist vom Gehäuse 12 abnehmbar, um ein einfaches Auswechseln des Prüfblechs 16 zu ermöglichen.

Das Prüfblech 16 weist mehrere Oberflächenstrukturen in Form von Prüfzeichen **26,** Rücknehmungen **28,** Bezugsflächen **30** und Prüfskalen **32** auf. Von den Oberflächenstrukturen abgesehen kann eine Oberfläche des Prüfblechs 16 beschichtet, insbesondere eloxiert, sein. Die Beschichtung kann in bunten oder unbunten Farben, beispielsweise schwarz, ausgeführt sein.

Die Prüfzeichen 26 werden durch ein lichtemittierendes Werkzeug (nicht gezeigt), insbesondere einen Laser, auf dem Prüfblech 16 erzeugt. Die Prüfzeichen 26 können vor, während und/oder nach einer Kalibrierung entstehen und dienen der Überprüfung der Fokuslage des lichtemittierenden Werkzeugs.

Die Rücknehmungen 28 weisen jeweils eine blanke (uneloxierte) Grundfläche sowie blanke (uneloxierte) Seitenflächen auf.

Die Prüfskalen 32 sind als blanke Flächen mit definierten Abständen ausgebildet.

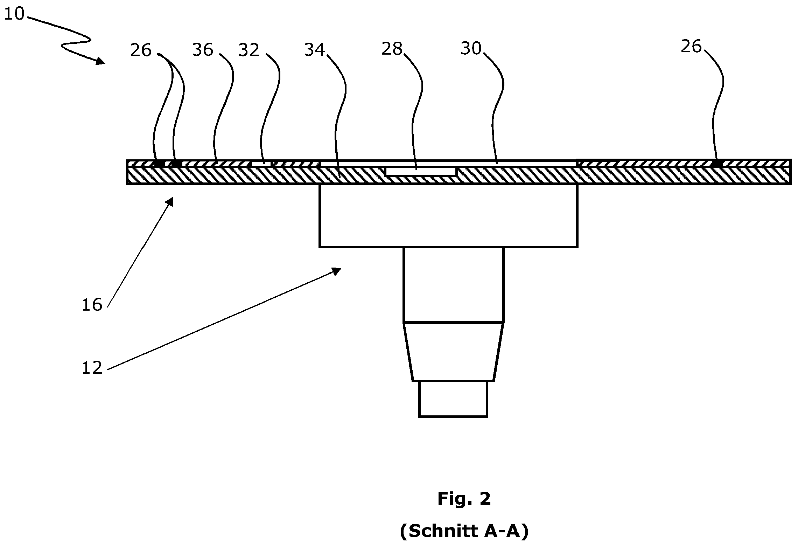

**Fig. 2** zeigt die Kalibriervorrichtung 10 mit Gehäuse 12 und Prüfblech 16 in einer Seitenansicht. Zur besseren Erläuterung ist das Prüfblech 16 entlang Schnittlinie A-A (vgl. Figur 1) geschnitten dargestellt.

Vorliegend weist das Prüfblech 16 ein Trägerblech **34** und eine eloxierte Schicht **36** auf. Die eloxierte Schicht 36 dient zur optischen Unterscheidung zwischen Oberflächenstrukturen sowie Bereichen des Prüfblechs 16, die zur Erzeugung der Prüfzeichen 26 durch ein optisches Werkzeug (nicht gezeigt) vorgesehen sind.

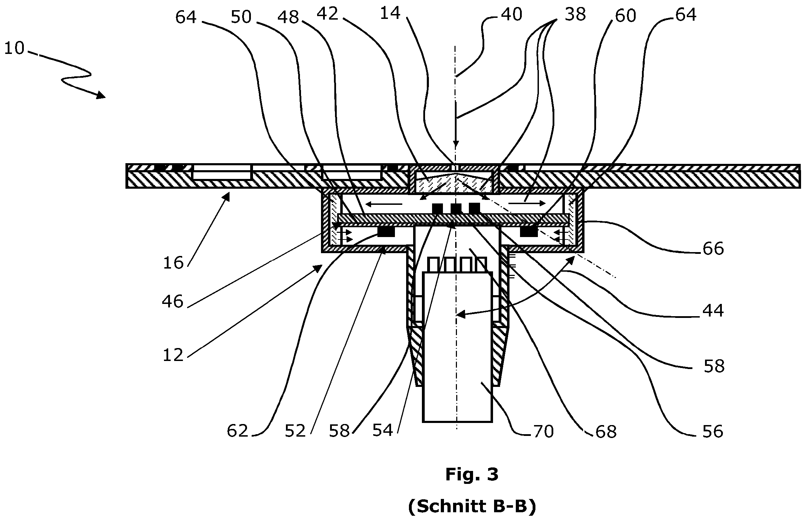

**Fig.** 3 zeigt eine Seitenansicht der Kalibriervorrichtung 10. Zur besseren Erläuterung sind das Gehäuse 12 und das Prüfblech 16 entlang Schnittlinie B-B (vgl. Figur 1) geschnitten dargestellt.

Durch die Blendenöffnung 14 fällt Licht **38** entlang einer Blendenachse **40** in das Gehäuse 12 ein. Unterhalb der Blendenöffnung 14 ist ein optisches Element **42** im Gehäuse 12 angeordnet. Das optische Element 42 lenkt das einfallende Licht 38 um einen Winkel **44** aus der Blendenachse 40 aus.

Unterhalb des optischen Elements 42 ist eine Platine **46** mit einer Trägerplatte **48** und einer Leiterbahnenschicht **50** im Gehäuse 12 angeordnet. Die Platine 46 trägt eine Sensoranordnung **52** und eine Lichtquellenanordnung **54.**

Die Lichtquellenanordnung 54 ist an der der Blendenöffnung 14 zugewandten Seite der Platine 46 bzw. der Trägerplatte 48 angeordnet. Vorliegend weist die Lichtquellenanordnung 54 eine erste Lichtquelle **56** und zwei zweite Lichtquellen **58** auf. Die erste und die zweiten Lichtquellen 56, 58 sind als Leuchtdioden ausgebildet.

Die erste Lichtquelle 56 ist zum Emittieren von Infrarot-Licht mit einer Wellenlänge von beispielsweise 1550 nm ausgebildet. Die erste Lichtquelle 56 kann entlang der Blendenachse 40 zwischen dem optischen Element 42 und der Trägerplatte 48 der Platine 46 angeordnet sein. Mit anderen Worten ist die erste Lichtquelle 56 auf der Blendenachse 40 der Blendenöffnung 14 angeordnet. Die Abstrahlrichtung der ersten Lichtquelle 56 ist in Richtung der Blendenöffnung 14. Hierdurch kann das von der ersten Lichtquelle 56 emittierte Infrarot-Licht besonders direkt durch die Blendenöffnung 14 gestrahlt werden.

Die zweiten Lichtquellen 58 sind auf der Trägerplatte 48 radial beabstandet zur Blendenachse 40 angeordnet und emittieren Rot-Licht mit einer Wellenlänge von beispielsweise 645 nm. Die zweiten Lichtquellen 58 sind vorzugsweise gleichmäßig und entsprechend der Kontur der Blendenöffnung 14 auf der Trägerplatte 48 angeordnet. Beispielsweise sind die zweiten Lichtquellen 58 kreisförmig angeordnet, wenn die Blendenöffnung 14 rund ausgebildet ist. Vorzugsweise steigt die Anzahl der zweiten Lichtquellen 58 mit steigender radialer Beabstandung von der Blendenachse 40, um die Blendenöffnung 14 gleichmäßig auszuleuchten. Die zweiten Lichtquellen 58 sind vorliegend parallel zur Blendenachse 40 ausgerichtet.

Ebenso ist denkbar, dass eine zweite Lichtquelle 58 entlang der Blendenachse 40 auf der Trägerplatte 48 und die erste Lichtquelle 56 radial zur Blendenachse 40 beabstandet angeordnet ist. Die vorangegangene Beschreibung ist dementsprechend analog zu verstehen.

Durch Ablenken des durch die Blendenöffnung 14 einfallenden Lichts 38 durch das optische Element 42 ist die Lichtquellenanordnung 54 vor der Lichtintensität des einfallenden Lichts 38 geschützt. Mit anderen Worten lenkt das optische Element 42 das einfallende Licht 38 an der Lichtquellenanordnung 54 vorbei.

Das optische Element 42 lenkt in umgekehrter Richtung von der Lichtquellenanordnung 54 emittiertes Infrarot- und/oder Rot-Licht in Richtung der Blendenöffnung 14 um. Mit anderen Worten ist die Wirkungsweise des optischen Elements 42 abhängig von der Anstrahlrichtung. Insbesondere kann das optische Element von den beiden zweiten Lichtquellen 58 abgestrahltes Licht auf die Blendenöffnung lenken.

Die Sensoranordnung 52 ist an der von der Blendenöffnung 14 abgewandten Seite der Platine 46 bzw. der Leiterbahnenschicht 50 angeordnet. Die Sensoranordnung 52 weist hier eine Fotodiode **60** und einen Temperatursensor **62** auf.

Die Fotodiode 60 ist zur Erfassung der Lichtintensität des durch die Blendenöffnung 14 einfallenden Lichts 38 ausgebildet. Vorliegend ist die Fotodiode 60 an der der Blendenöffnung 14 abgewandten Seite der Platine 46 angeordnet, um die zu erfassende Lichtintensität des Lichts 38 in einen von der Fotodiode messbaren Bereich zu verringern. Mit anderen Worten ist die Lichtintensität des Lichts 38 bei Einfall durch die Blendenöffnung 14 zu hoch und muss vor der Erfassung reduziert werden.

Hierzu weist das Gehäuse 12 ein lichtleitendes Element auf, das vorliegend in Form einer lichtleitenden Hülse **64** ausgebildet ist. Die lichtleitende Hülse 64 ist zwischen dem Rand der Platine 46 und einer Seitenwand **66** des Gehäuses 12 angeordnet. Die lichtleitende Hülse 64 erstreckt sich zur besseren Lichtleitung sowohl in den der Blendenöffnung 14 zugewandten als auch in den von der Blendenöffnung 14 abgewandten Bereich des Gehäuses 12.

Das durch das optische Element 42 abgelenkte einfallende Licht 38 wird mittels der lichtleitenden Hülse 64 von der der Blendenöffnung 14 zugewandten Seite auf die der Blendenöffnung 14 abgewandten Seite der Platine 46 geleitet. Zur Minderung der Lichtintensität weist das lichtleitende Element eine verminderte Lichtdurchlässigkeit auf. Die Lichtdurchlässigkeit des lichtleitenden Elements ist an die Lichtintensität des einfallenden Lichts 38 anpassbar. Mit anderen Worten wird ein Teil des einfallenden Lichts 38 in dem lichtleitenden Element absorbiert.

Die lichtleitende Hülse 64 ist vorliegend zum Halten der Platine 46 ausgebildet. Zu diesem Zweck weist die lichtleitende Hülse 64 eine radial umlaufende Nut auf, welche die Platine 46 einfasst.

An der Platine 46 ist ein Stecker **68** zum Herstellen einer Daten- und Stromanbindung **70** angeordnet.

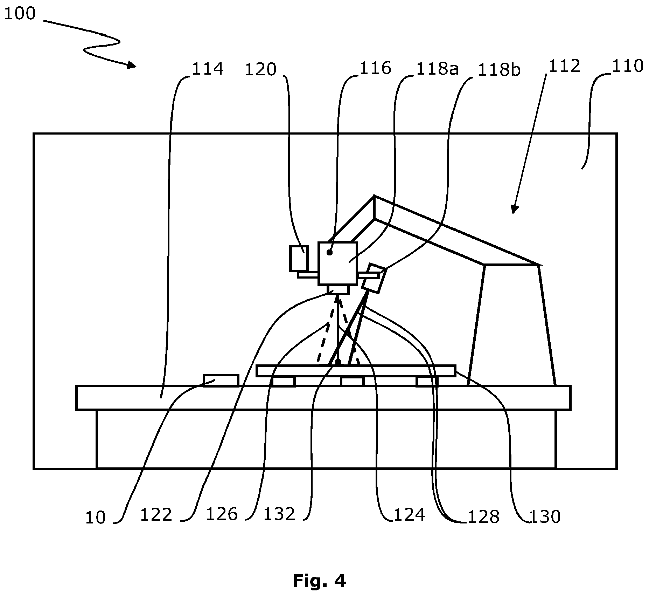

**Fig. 4** zeigt ein Bearbeitungssystem **100** mit einer innerhalb eines Bearbeitungsraums **110** angeordneten Bearbeitungsmaschine **112.**

Die Bearbeitungsmaschine 112 ist auf einem Bearbeitungstisch **114** angeordnet und weist einen Bearbeitungskopf **116** auf. Der Bearbeitungskopf 116 umfasst vorliegend drei optische Werkzeuge, nämlich zwei lichtemittierende Werkzeuge und ein lichtdetektierendes Werkzeug.

Bei der dargestellten Ausführungsform sind die lichtemittierenden Werkzeuge ein Bearbeitungslaser **118a** und ein Messlaser **118b.** Das lichtdetektierende Werkzeug ist vorliegend eine Kamera **120.**

Der Bearbeitungslaser 118a und die Kamera 120 weisen eine gemeinsame Fokussieroptik **122** auf. Dies ermöglicht eine Gleichausrichtung eines Laserstrahls **124** und eines Kamerabildes **126.** Der Messlaser 118b weist zwei Linienlaser **128** auf zur Vermessung eines Werkstücks **130** vor und hinter einer durch den Laserstrahl 124 erzeugten Schweißnaht.

Die optischen Werkzeuge des Bearbeitungskopfes 116 weisen einen gemeinsame Fokuslage **132** auf. Zur Durchführung eines nachfolgend beschriebenen Kalibrierverfahrens zum Einrichten der gemeinsamen Fokuslage 132 kann der Bearbeitungskopf 116 in eine Position oberhalb der Kalibriervorrichtung 10 bewegt werden.

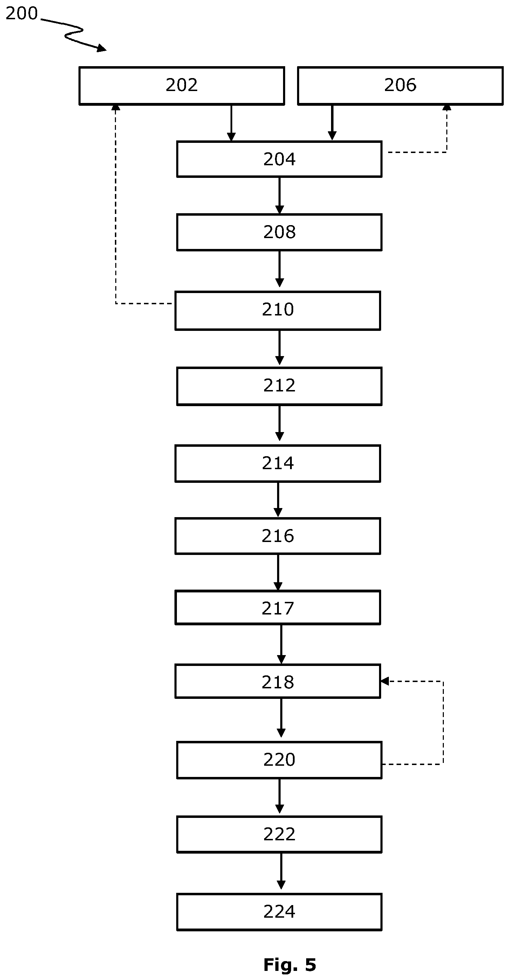

**Fig. 5** zeigt einen schematischen Verfahrensablauf eines erfindungsgemäßen Verfahrens zum Kalibrieren eines Bearbeitungssystems. Das Verfahren kann an dem Bearbeitungssystem 100 (vgl. Figur 4) mit der Kalibriervorrichtung 10 (vgl. Figuren 1 bis 3) durchgeführt werden.

In einem Verfahrensschritt **202** wird der unkalibrierte Bearbeitungskopf 116 grob über der Kalibriervorrichtung 10 positioniert. Die (im Idealfall zu erwartende) theoretische Fokuslage der optischen Werkzeuge des Bearbeitungskopfes 116 soll dabei deckungsgleich mit der Blendenöffnung 14 sein.

Sodann wird in einem Verfahrensschritt **204** Licht definiert durch ein lichtemittierendes Werkzeug, insbesondere einen Bearbeitungslaser 118a oder einen Messlaser 118b, in Richtung der Blendenöffnung 14 abgegeben und das durch die Blendenöffnung 14 einfallende Licht 38 durch die Sensoranordnung 52 erfasst.

Vorzugsweise wird das lichtemittierende Werkzeug in einem Verfahrensschritt **206,** insbesondere mehrmals, definiert ausgelenkt. Der Verfahrensschritt 204 wird bei jeder definierten Auslenkung wiederholt. Die Anzahl sowie Betrag und Richtung der Auslenkungen können dabei durch ein Prüfmuster bestimmt sein.

Nach Durchführen der Schritte 204 und 206 wird die tatsächliche Fokuslage 132 des lichtemittierenden Werkzeugs in einem Verfahrensschritt **208** ermittelt. Die tatsächliche Fokuslage 132 kann aus dem Anteil an tatsächlich erfasstem Licht zu theoretisch erfassbarem Licht zu jeder definierten Auslenkung bestimmt werden. Beispielsweise kann der Anteil des tatsächlich erfassten Lichts 38 bei idealer (deckungsgleicher) tatsächlicher Fokuslage 132 über der Blendenöffnung 14 bei 100 Prozent des abgegebenen Lichts liegen.

In einem Verfahrensschritt **210** wird die tatsächliche Fokuslage des lichtemittierenden Werkzeugs auf die angestrebte Fokuslage, insbesondere die Blendenöffnung 14, eingestellt. Hierbei wird die theoretische Fokuslage des optischen Werkzeugs um die Abweichung zur ermittelten Fokuslage korrigiert.

Zum Überprüfen der derart kalibrierten Fokuslage kann im Anschluss vorgesehen sein, dass die Verfahrensschritte 202 bis 208 wiederholt werden.

Weiter vorgesehen kann sein, dass die Fokuslage des lichtemittierenden optischen Werkzeugs durch ein lichtdetektierendes optisches Werkzeug überprüft wird. Hierbei wird ein Prüfzeichen 26 durch das lichtemittierende optische Werkzeug auf dem Prüfblech 16, insbesondere dauerhaft, markiert. Das Prüfzeichen 26 wird sodann durch das lichtdetektierende optische Werkzeug erfasst und auf Abweichungen zu einer Referenz überprüft. Insbesondere kann eine Referenz in Form eines vor dem Kalibrieren des lichtemittierenden optischen Werkzeugs markierten Prüfzeichens 26 ausgebildet sein.

Ein der eingestellten Fokuslage des lichtemittierenden optischen Werkzeugs entsprechender Fokuspunkt wird sodann in einem Verfahrensschritt **212** mit der Blendenöffnung 14 zur Deckung gebracht. Das anschließende Kalibrieren weiterer optischer Werkzeuge erfolgt mithin relativ zu dem kalibrierten lichtemittierenden Werkzeug. Hierdurch können die optischen Werkzeuge des Bearbeitungskopfes 116 auf eine gemeinsame Fokuslage eingestellt werden.

In einem anschließenden Verfahrensschritt **214** wird Licht durch die Lichtquellenanordnung 54 der Kalibriervorrichtung 10 emittiert und durch die Blendenöffnung 14 abgestrahlt. Das abgestrahlte Licht wird durch ein zu kalibrierendes lichtdetektierendes Werkzeug, insbesondere eine Kamera 120, erfasst.

Auf Grundlage des erfassten Lichts wird in einem Verfahrensschritt **216** die tatsächliche Fokuslage des lichtdetektierenden optischen Werkzeugs ermittelt. Vorzugsweise wird hierbei eine Abbildung der Blendenöffnung 14 durch das lichtdetektierende Werkzeug erzeugt und die tatsächliche Fokuslage durch Bestimmen der beleuchteten Blendenöffnung 14 in der Abbildung ermittelt. Insbesondere kann die tatsächliche Fokuslage durch die Lageabweichung der Blendenöffnung 14 aus einem Mittelpunkt der Abbildung bestimmt werden. Durch entsprechende Korrektur kann die Fokuslage des lichtdetektierenden Werkzeugs in einem Schritt **217** eingestellt werden.

Ferner kann vorgesehen sein, dass das Ermitteln der tatsächlichen Fokuslage in einer zu den Verfahrensschritten 204 bis 208 analogen Weise für das zu kalibrierende lichtdetektierende Werkzeug erfolgt.

Nach dem Kalibrieren der Fokuslagen der optischen Werkzeuge des Bearbeitungskopfs 116 kann eine Ausrichtung, beispielsweise bei Verdrehung und/oder Verkippung, der optischen Werkzeuge kalibriert werden.

Hierzu kann zumindest eines der optischen Werkzeuge, insbesondere ein lichtdetektierendes optisches Werkzeug, in einem Verfahrensschritt **218** definiert aus seiner Fokuslage ausgelenkt wird. Anschließend wird in einem Verfahrensschritt **220** eine definierte Oberflächenstruktur, insbesondere eine geometrisch definierte Oberflächenstruktur, aus der ausgelenkten Lage durch das optische Werkzeug vermessen. Der resultierende Messwert ist mithin von der tatsächlichen Ausrichtung, beispielsweise einer Verkippung, des optischen Werkzeugs abhängig. Vorzugsweise werden die Verfahrensschritte 218 und 220 mehrmals, insbesondere nach einem vordefinierten Schema, durchgeführt.

In einem nachfolgenden Verfahrensschritt **222** werden die Messwerte mit hinterlegten Referenzwerten bei korrekter Ausrichtung des optischen Werkzeugs abgeglichen und in einem Verfahrensschritt **224** die Ausrichtung des optischen Werkzeugs entsprechend der Abweichung zwischen Mess- und Referenzwert eingestellt.

Unter Vornahme einer Zusammenschau aller Figuren betrifft die Erfindung eine Vorrichtung 10 zum Kalibrieren mehrerer optischer Werkzeuge einer Bearbeitungsmaschine 112 auf eine gemeinsame Fokuslage 132. Die Vorrichtung 10 weist Lichtsensoren 60, 62 und Lichtquellen 56, 58 zum Erfassen und zum Abgeben von Licht 38 durch eine Blendenöffnung 14 einer Blende auf. Ferner betrifft die Erfindung ein Bearbeitungssystem 100 mit einer solchen Vorrichtung 10 und mehreren optischen Werkzeugen. Schließlich betrifft die Erfindung ein Verfahren 200 zum Kalibrieren von lichtemittierenden und lichtdetektierenden optischen Werkzeugen mittels einer solchen Vorrichtung 10.

### Bezugszeichenliste

- 10: Kalibriervorrichtung;
- 12: Gehäuse;
- 14: Blendenöffnung;
- 16: Prüfblech;
- 18: Gehäuseausnehmung des Prüfblechs 16;
- 20: Gehäusevorsprung des Gehäuses 12;
- 22: Zentrierstift des Gehäuses 12;
- 24: Zentrierausnehmung des Prüfblechs 16;
- 26: Prüfzeichen;
- 28: Rücknehmungen;
- 30: Bezugsflächen;
- 32: Prüfskalen;
- 34: Trägerblech;
- 36: eloxierte Schicht;
- 38: einfallendes Licht durch die Blendenöffnung 14;
- 40: Blendenachse;
- 42: optisches Element;
- 44: Winkel;
- 46: Platine;
- 48: Trägerplatte;
- 50: Leiterbahnenschicht;
- 52: Sensoranordnung;
- 54: Lichtquellenanordnung;
- 56: erste Lichtquelle;
- 58: zweite Lichtquelle;
- 60: Fotodiode;
- 62: Temperatursensor;
- 64: lichtleitende Hülse;
- 66: Seitenwand des Gehäuses 12;
- 68: Stecker;
- 70: Daten- und Stromanbindung;

- 100: Bearbeitungssystem;
- 110: Bearbeitungsraum;
- 112: Bearbeitungsmaschine;
- 114: Bearbeitungstisch;
- 116: Bearbeitungskopf der Bearbeitungsmaschine 112;
- 118a: Bearbeitungslaser;
- 118b: Messlaser;
- 120: Kamera;
- 122: Fokussieroptik;
- 124: Laserstrahl;
- 126: Kamerabild;
- 128: Messlaserstrahlen;
- 130: Werkstück;
- 132: Fokuslage;

- 200: Verfahren;
- 202: Positionieren des Bearbeitungskopfs 116;
- 204: Abgeben von Licht durch ein lichtemittierendes Werkzeug und Erfassen des durch die Blendenöffnung einfallenden Lichts;
- 206: definiertes Auslenken des lichtemittierenden Werkzeugs;
- 208: Ermitteln der Fokuslage des lichtemittierenden Werkzeugs;
- 210: Einstellen des lichtemittierenden Werkzeugs;
- 212: Positionieren eines Fokuspunkts über der Blendenöffnung 14;
- 214: Abstrahlen von Licht durch die Lichtquellenanordnung 54;
- 216: Ermitteln der Fokuslage durch das lichtdetektierende Werkzeug;
- 217: Einstellen der Fokuslage des lichtdetektierenden Werkzeugs;
- 218: Auslenken eines lichtdetektierenden Werkzeugs;
- 220: Vermessen einer Oberflächenstruktur durch das lichtdetektierende Werkzeug;
- 222: Abgleich der Messwerte mit hinterlegten Referenzwerten;
- 224: Ausrichten des lichtdetektierenden Werkzeugs.

## Patentansprüche

1. Kalibriervorrichtung (10), für ein Bearbeitungssystem mit mehreren optischen Werkzeugen, aufweisend
- ein Gehäuse (12) mit einer Blendenöffnung (14),
- eine Sensoranordnung (52) zum Erfassen von durch die Blendenöffnung (14) einfallendem Licht (38),
- eine Lichtquellenanordnung (54) zum Abgeben von Licht durch die Blendenöffnung (14), und
- eine im Gehäuse (12) angeordnete Platine (46), an welcher die Lichtquellenanordnung (54) und/oder die Sensoranordnung (52) gehalten sind,
**dadurch gekennzeichnet,**
**dass** die Sensoranordnung (52) auf einer von der Blendenöffnung (14) abgewandten Seite der Platine (46) angeordnet ist, und
**dass** eine lichtleitende Struktur zum Leiten des durch die Blendenöffnung (14) einfallenden Lichts (38) zu der Sensoranordnung (52) vorgesehen ist.

2. Kalibriervorrichtung nach Anspruch 1, wobei die Platine (46) parallel zu einer die Blendenöffnung (14) aufweisenden Blende angeordnet ist.

3. Kalibriervorrichtung nach Anspruch 2, wobei die Platine (46) orthogonal zu einer Blendenachse (40) der Blendenöffnung (14) angeordnet sein.

4. Kalibriervorrichtung nach einem der Ansprüche 1 bis 3, wobei die lichtleitende Struktur eine lichtdurchlässige Hülse (64) aufweist, mittels welcher die Platine (46) im Gehäuse (12) gehalten ist.

5. Kalibriervorrichtung nach einem der Ansprüche 1 bis 4, aufweisend ein zwischen der Blendenöffnung (14) und der Platine (46) angeordnetes optisches Element (42) zur Umlenkung von durch die Blendenöffnung (14) einfallendem Licht (38).

6. Kalibriervorrichtung nach einem der vorhergehenden Ansprüche, wobei die Sensoranordnung (52) eine Fotodiode (60) und/oder einen Temperatursensor (62) aufweist.

7. Kalibriervorrichtung nach einem der vorhergehenden Ansprüche, wobei die Lichtquellenanordnung (54) zumindest eine erste Lichtquelle (56), insbesondere eine Leuchtdiode, zur Abgabe von Licht mit einer Wellenlänge von wenigstens 760 nm, bevorzugt wenigstens 1100 nm, besonders bevorzugt wenigstens 1500 nm, und bevorzugt höchstens 2000 nm, besonders bevorzugt höchstens 1600 nm, aufweist.

8. Kalibriervorrichtung nach einem der vorhergehenden Ansprüche, wobei die Lichtquellenanordnung (54) zumindest eine zweite Lichtquelle (58), insbesondere eine Leuchtdiode, zur Abgabe von Licht mit einer Wellenlänge von höchstens 760 nm, besonders bevorzugt höchstens 650 nm und bevorzugt wenigstens 610 nm, besonders bevorzugt wenigstens 640 nm aufweist.

9. Kalibriervorrichtung nach einem der vorhergehenden Ansprüche, weiterhin aufweisend ein sich orthogonal zu einer Blendenachse (40) der Blendenöffnung (14) erstreckendes Prüfblech (16), insbesondere wobei das Prüfblech (16) eine bereichsweise beschichtete, vorzugsweise eloxierte, Oberfläche (36) aufweist.

10. Kalibriervorrichtung nach Anspruch 9, wobei das Prüfblech (16) definierte Oberflächenstrukturen zur Kalibrierung der optischen Werkzeuge aufweist.

11. Kalibriervorrichtung nach Anspruch 9 oder 10, wobei das Prüfblech (16) zumindest eine Rücknehmung (28) und/oder zumindest einen Vorsprung mit einem definierten Höhensprung parallel zur Blendenachse (40) aufweist, insbesondere wobei das Prüfblech (16) angrenzend an die Rücknehmung (28) und/oder den Vorsprung blanke Bezugsflächen (30) aufweist.

12. Kalibriervorrichtung nach einem der Ansprüche 9 bis 11, wobei das Prüfblech (16) zumindest eine Prüfskala (32) mit definierten Referenzabständen aufweist.

13. Verfahren zum Kalibrieren eines Bearbeitungssystems mit zumindest einem lichtemittierenden optischen Werkzeug und zumindest einem lichtdetektierenden optischen Werkzeug mittels einer Kalibriervorrichtung (10) nach einem der vorhergehenden Ansprüche, mit den Verfahrensschritten:
A) Erfassen (204) von durch die Blendenöffnung (14) einfallendem, von dem lichtemittierenden optischen Werkzeug abgegebenem Licht (40) mit der Sensoranordnung (52) und Einstellen (210) einer Fokuslage des lichtemittierenden optischen Werkzeugs auf die Blendenöffnung (14);
B) Erfassen (214) von durch die Blendenöffnung (14) ausgesandtem, von der Lichtquellenanordnung (54) abgegebenem Licht mit dem lichtdetektierenden optischen Werkzeug und Einstellen (217) einer Fokuslage des lichtdetektierenden optischen Werkzeugs auf die Blendenöffnung (14).

14. Verfahren nach Anspruch 13, wobei die Kalibriervorrichtung (10) ein Prüfblech (16) aufweist, mit den weiteren Verfahrensschritten:
C) Markieren eines Prüfzeichens (26) auf dem Prüfblech (16) durch das lichtemittierende Werkzeug;
D) Überprüfen der Fokuslage des lichtemittierenden Werkzeugs durch Erfassen des Prüfzeichens (26) mittels des lichtdetektierenden optischen Werkzeugs.

15. Verfahren nach Anspruch 13 oder 14, wobei die Kalibiervorrichtung (10) nach einem der Ansprüche 9 bis 12 ausgebildet ist, aufweisend die weiteren Verfahrensschritte:
E) Definiertes Auslenken (218) des lichtdetektierenden optischen Werkzeugs;
F) Vermessen (220) zumindest einer der Oberflächenstrukturen durch das lichtdetektierende optische Werkzeug;
G) Abgleich (222) der Messwerte mit hinterlegten Referenzwerten;
H) Ausrichten (224) des lichtdetektierenden Werkzeugs auf Basis der Abweichung zwischen Messwerten und Referenzwerten.

16. Bearbeitungssystem (100) mit einer Kalibriervorrichtung (10) nach einem der Ansprüche 1 bis 12 und mit mehreren optischen Werkzeugen, vorzugsweise wobei die optischen Werkzeuge an einem gemeinsamen Bearbeitungskopf (116) des Bearbeitungssystems (100) angeordnet sind.

## Claims

1. A calibration device (10) for a processing system with a plurality of optical tools, having
- a housing (12) with an aperture opening (14),
- a sensor arrangement (52) for capturing light (38) incident through the aperture opening (14),
- a light source arrangement (54) for delivering light through the aperture opening (14), and
- a circuit board (46) arranged in the housing (12), on which the light source arrangement (54) and/or the sensor arrangement (52) are held,
**characterized in that**
the sensor arrangement (52) is arranged on a side of the circuit board (46) facing away from the aperture opening (14), and
a light-conducting structure is provided for conducting the light (38) incident through the aperture opening (14) to the sensor arrangement (52).

2. The calibration device according to claim 1, wherein the circuit board (46) is arranged parallel to an aperture having the aperture opening (14).

3. The calibration device according to claim 2, wherein the circuit board (46) is arranged orthogonally to an aperture axis (40) of the aperture opening (14).

4. The calibration device according to one of claims 1 to 3, wherein the light-conducting structure has a translucent sleeve (64) by means of which the circuit board (46) is held in the housing (12).

5. The calibration device according to one of claims 1 to 4, having an optical element (42) arranged between the aperture opening (14) and the circuit board (46) for the deflection of light (38) incident through the aperture opening (14).

6. The calibration device according to one of the preceding claims, wherein the sensor arrangement (52) has a photodiode (60) and/or a temperature sensor (62).

7. The calibration device according to one of the preceding claims, wherein the light source arrangement (54) has at least a first light source (56), in particular a light-emitting diode, for the delivery of light with a wavelength of at least 760 nm, preferably at least 1100 nm, in particular preferably at least 1500 nm, and preferably at most 2000 nm, in particular preferably at most 1600 nm.

8. The calibration device according to one of the preceding claims, wherein the light source arrangement (54) has at least a second light source (58), in particular a light-emitting diode, for the delivery of light with a wavelength of at most 760 nm, in particular preferably at most 650 nm, and preferably at least 610 nm, in particular preferably at least 640 nm.

9. The calibration device according to one of the preceding claims, further having a test plate (16) extending orthogonally to an aperture axis (40) of the aperture opening (14), in particular wherein the test plate (16) has a regionally coated, preferably anodized, surface (36).

10. The calibration device according to claim 9, wherein the test plate (16) has defined surface structures for the calibration of the optical tools.

11. The calibration device according to claim 9 or 10, wherein the test plate (16) has at least one recess (28) and/or at least one projection with a defined height difference parallel to the aperture axis (40), in particular wherein the test plate (16) has bare reference surfaces (30) adjacent to the recess (28) and/or the projection.

12. The calibration device according to one of claims 9 to 11, wherein the test plate (16) has at least one test scale (32) with defined reference distances.

13. A method for calibrating a processing system with at least one light-emitting optical tool and at least one light-detecting optical tool by means of a calibration device (10) according to one of the preceding claims, with the method steps:
A) capturing (204) light (40) incident through the aperture opening (14) and delivered by the light-emitting optical tool with the sensor arrangement (52) and adjusting (210) a focal position of the light-emitting optical tool to the aperture opening (14);
B) capturing (214) light transmitted through the aperture opening (14) and delivered by the light source arrangement (54) with the light-detecting optical tool, and adjusting (217) a focal position of the light-detecting optical tool to the aperture opening (14).

14. The method according to claim 13, wherein the calibration device (10) has a test plate (16), with the further method steps:
C) marking a test mark (26) on the test plate (16) by the light-emitting tool;
D) checking the focal position of the light-emitting tool by capturing the test mark (26) by means of the light-detecting optical tool.

15. The method according to claim 13 or 14, wherein the calibration device (10) is designed according to one of claims 9 to 12, having the further method steps:
E) definedly deflecting (218) the light-detecting optical tool;
F) measuring (220) at least one of the surface structures by the light-detecting optical tool;
G) comparing (222) the measured values with stored reference values;
H) aligning (224) the light-detecting tool based on the deviation between measured values and reference values.

16. A processing system (100) with a calibration device (10) according to one of claims 1 to 12 and with a plurality of optical tools, preferably wherein the optical tools are arranged on a common processing head (116) of the processing system (100).

## Revendications

1. Dispositif d'étalonnage (10) destiné à un système de traitement avec plusieurs outils optiques, comprenant :
- un boîtier (12) avec une ouverture de diaphragme (14),
- un agencement de capteurs (52) destiné à détecter la lumière (38) incidente à travers l'ouverture de diaphragme (14),
- un agencement de sources lumineuses (54) destiné à émettre de la lumière à travers l'ouverture de diaphragme (14), et
- un circuit imprimé (46) disposé dans le boîtier (12), sur lequel l'agencement de sources lumineuses (54) et/ou l'agencement de capteurs (52) sont maintenus,
**caractérisé en ce que**,
l'agencement de capteurs (52) est disposé sur une face du circuit imprimé (46) opposée à l'ouverture de diaphragme (14), et
**en ce qu'**une structure de guidage lumineux est prévue pour acheminer la lumière (38) incidente à travers l'ouverture de diaphragme (14) vers l'agencement de capteurs (52).

2. Dispositif d'étalonnage selon la revendication 1, dans lequel le circuit imprimé (46) est disposé parallèlement à un diaphragme comprenant l'ouverture de diaphragme (14).

3. Dispositif d'étalonnage selon la revendication 2, dans lequel le circuit imprimé (46) est disposé orthogonalement à un axe de diaphragme (40) de l'ouverture de diaphragme (14).

4. Dispositif d'étalonnage selon l'une des revendications 1 à 3, dans lequel la structure de guidage lumineux comprend un manchon translucide (64) au moyen duquel le circuit imprimé (46) est maintenu dans le boîtier (12).

5. Dispositif d'étalonnage selon l'une des revendications 1 à 4, comprenant un élément optique (42) disposé entre l'ouverture de diaphragme (14) et le circuit imprimé (46) pour la déviation de la lumière (38) incidente à travers l'ouverture de diaphragme (14).

6. Dispositif d'étalonnage selon l'une des revendications précédentes, dans lequel l'agencement de capteurs (52) comprend une photodiode (60) et/ou un capteur de température (62).

7. Dispositif d'étalonnage selon l'une des revendications précédentes, dans lequel l'agencement de sources lumineuses (54) comprend au moins une première source lumineuse (56), en particulier une diode électroluminescente, pour l'émission d'une lumière d'une longueur d'onde d'au moins 760 nm, de préférence au moins 1100 nm, plus préférablement au moins 1500 nm, et de préférence au plus 2000 nm, plus préférablement au plus 1600 nm.

8. Dispositif d'étalonnage selon l'une des revendications précédentes, dans lequel l'agencement de sources lumineuses (54) comprend au moins une deuxième source lumineuse (58), en particulier une diode électroluminescente, pour l'émission d'une lumière d'une longueur d'onde d'au plus 760 nm, plus préférablement au plus 650 nm, et de préférence au moins 610 nm, plus préférablement au moins 640 nm.

9. Dispositif d'étalonnage selon l'une des revendications précédentes, comprenant en outre une plaque d'essai (16) s'étendant orthogonalement à un axe de diaphragme (40) de l'ouverture de diaphragme (14), en particulier dans lequel la plaque d'essai (16) comprend une surface (36) partiellement revêtue, de préférence anodisée.

10. Dispositif d'étalonnage selon la revendication 9, dans lequel la plaque d'essai (16) comprend des structures de surface définies pour l'étalonnage des outils optiques.

11. Dispositif d'étalonnage selon la revendication 9 ou 10, dans lequel la plaque d'essai (16) comprend au moins un évidement (28) et/ou au moins une saillie avec un saut de hauteur défini, parallèle à l'axe de diaphragme (40), en particulier dans lequel la plaque d'essai (16) comprend des surfaces de référence brutes (30) adjacentes à l'évidement (28) et/ou à la saillie.

12. Dispositif d'étalonnage selon l'une des revendications 9 à 11, dans lequel la plaque d'essai (16) comprend au moins une échelle de contrôle (32) avec des distances de référence définies.

13. Procédé d'étalonnage d'un système de traitement avec au moins un outil optique émetteur de lumière et au moins un outil optique détecteur de lumière au moyen d'un dispositif d'étalonnage (10) selon l'une des revendications précédentes, avec les étapes de procédé :
A) détection (204), au moyen de l'agencement de capteurs (52), de la lumière (40) incidente émise par l'outil optique émetteur de lumière à travers l'ouverture de diaphragme (14), et réglage (210) de la position focale de l'outil optique émetteur de lumière sur l'ouverture de diaphragme (14) ;
B) détection (214), par l'outil optique détecteur de lumière, de la lumière émise par l'agencement de sources lumineuses (54) et sortant à travers l'ouverture de diaphragme (14), et réglage (217) de la position focale de l'outil optique détecteur de lumière sur l'ouverture de diaphragme (14).

14. Procédé selon la revendication 13, dans lequel le dispositif d'étalonnage (10) comprend une plaque d'essai (16), avec les étapes de procédé supplémentaires :
C) marquage d'une marque de contrôle (26) sur la plaque d'essai (16) par l'outil émetteur de lumière ;
D) vérification de la position focale de l'outil émetteur de lumière par détection de la marque de contrôle (26) au moyen de l'outil optique détecteur de lumière.

15. Procédé selon la revendication 13 ou 14, dans lequel le dispositif d'étalonnage (10) est conçu selon l'une des revendications 9 à 12, comprenant les étapes supplémentaires :
E) déviation définie (218) de l'outil optique détecteur de lumière ;
F) mesure (220) d'au moins une des structures de surface par l'outil optique détecteur de lumière ;
G) comparaison (222) des valeurs mesurées avec des valeurs de référence enregistrées ;
H) alignement (224) de l'outil détecteur de lumière sur la base de l'écart entre les valeurs mesurées et les valeurs de référence.

16. Système de traitement (100) avec un dispositif d'étalonnage (10) selon l'une des revendications 1 à 12 et plusieurs outils optiques, de préférence dans lequel les outils optiques sont disposés sur une tête de traitement (116) commune du système de traitement (100).
